Europäisches Patentamt

European Patent Office

Office européen des brevets

(19)

(11) Numéro de publication : **0 348 322 B1**

(12) **FASCICULE DE BREVET EUROPEEN**

(45) Date de publication du fascicule du brevet :
**28.04.93 Bulletin 93/17**

(51) Int. Cl.⁵ : **H04N 5/16**

(21) Numéro de dépôt : **89460021.2**

(22) Date de dépôt : **22.06.89**

(54) **Procédé de restitution de la composante continue d'un signal du type DMAC/paquet, dispositif et utilisation correspondants.**

(30) Priorité : **23.06.88 FR 8808625**

(43) Date de publication de la demande :
**27.12.89 Bulletin 89/52**

(45) Mention de la délivrance du brevet :
**28.04.93 Bulletin 93/17**

(84) Etats contractants désignés :
**DE GB IT NL**

(56) Documents cités :
**EP-A- 0 167 430**

(73) Titulaire : **FRANCE TELECOM**
**6, Place d'Alleray**
**F-75015 Paris (FR)**
Titulaire : **TELEDIFFUSION DE FRANCE S.A.**
**21-27, rue Barbès**
**F-92542 Montrouge Cédex (FR)**

(72) Inventeur : **Declerck, Christophe**
**26 rue de La Motte**
**F-35630 Hédé (FR)**
Inventeur : **Gaudrel, Roger**
**1 rue Hector Berlioz**
**F-35132 Vézin-Le-Coquet (FR)**

(74) Mandataire : **Corlau, Vincent**
**c/o Cabinet Patrice Vidon Immeuble**
**Germanium 80 avenue des Buttes de**
**Coesmes**
**F-35700 Rennes (FR)**

## Description

Le domaine de l'invention est celui des procédés de restitution de la composante continue des signaux du type appartenant à la famille MAC Paquet, et plus particulièrement des signaux normalisés DMAC Paquet, D2MAC Paquet, ou encore des signaux de télévision haute définition (TVHD) également nommés HDMAC.

Dans le cas des signaux de la famille MAC Paquet proprement dite, l'information transportée est relative à un signal de télévision en couleurs, chaque ligne étant constitué notamment d'un multiplex d'une salve de sons et données, d'une partie image (luminance et chrominance), et entre autres d'informations d'alignement et de synchronisation.

Lors de la transmission du signal, la composante continue du signal d'origine est perdue, pour l'essentiel, lors de l'opération de modulation de la porteuse, notamment en cas de transmission par voie hertzienne. Le signal transmis est en outre sujet aux distorsions, aux interférences, et subit éventuellement une modulation supplémentaire en dispersion d'énergie dans le cas d'une transmission par satellite.

On connaît déjà deux principes de restitution de la composante continue, applicables aux signaux du type de la famille MAC Paquets :

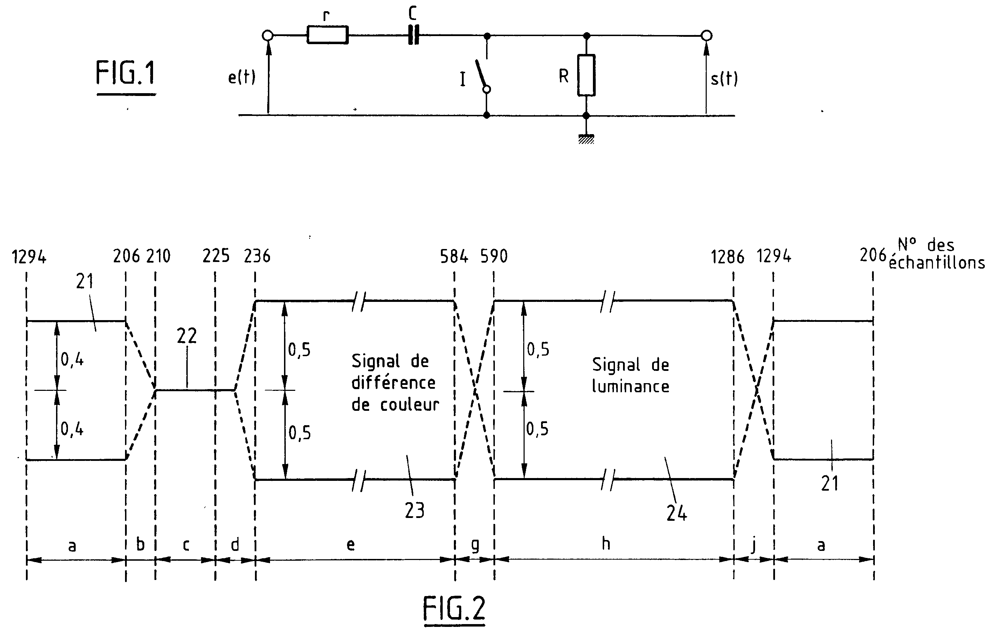

- le "clamp", qui, dans le cas général (Fig. 1), consiste à charger un condensateur C pendant un intervalle donné To du signal reçu, appelé période d'alignement. Cette période de chargement To correspond à une phase d'estimation de la composante continue, et la tension de charge est conservée comme correction apportée au signal. Dans le schéma de la Fig.1, e(t) représente le signal d'entrée, s(t) le signal de sortie, R l'impédance du circuit suivant (R >> r), et I l'interrupteur commandé qui est fermé pendant la durée To de la période To de chargement du condensateur C.
- les contre-réactions.

Une analyse mathématique montre que les clamps et les contre-réactions sont rigoureusement identiques quant à leurs résultats.

Ce système connu présente un certain nombre d'inconvénients.

Tout d'abord, il faut noter que la restitution de la composante continue ne peut pas se faire parfaitement, ni de façon certaine, c'est-à-dire sans dépendance vis-à-vis du bruit et des composantes basse fréquence du signal. Cet objectif ne constitue même pas une limite théorique, en raison des incertitudes de l'estimation de la composante continue d'un signal d'erreur. Ceci explique que l'optimisation de l'opération de restitution de la composante continue comporte une bonne part d'empirisme, et de contingence à la structure du signal reçu.

En second lieu, la restitution de la composante continue exige un compromis entre les réjections du bruit replié (résultant en un 'bruit de ligne"), et des composantes basse fréquence (distorsion ou composante superposée).

La sensibilité au repliement du bruit du signal, dans la correction ligne à ligne de la composante continue, apparaît essentiellement en présence de bruit ou de composantes spectrales au-delà de 7,8 KHz, du fait que la fréquence d'échantillonnage de l'estimation est de 15.625 Hz. les composantes basse fréquence proviennent par exemple de l'oscillateur local, d'inductions à la fréquence secteur (ronflette), ou encore de parasites, distorsions, bruits blancs Gaussiens, bruits impulsifs, entre autres. le traitement du signal en dispersion d'énergie, dans le cas d'une transmission par satellite, rajoute une composante une basse fréquence triangulaire à 25 Hz, qui complique encore la restitution de la composante continue.

D'un point de vue psychovisuel, le bruit en basse fréquence se traduit essentiellement par des différences de niveau de luminance sur la hauteur de l'image. Pour sa part, le bruit replié se traduit par des variations de niveau de luminance de ligne à ligne, et constitue le premier défaut sensible sur l'image, et est d'autant plus perçu que la définition de l'image est bonne. Ceci implique une prise en compte spécifique de ce problème dans le cas d'un signal d'image en haute définition.

On sait également que la présence de plusieurs clamps dans la chaine de diffusion est extrêmement préjudiciable à l'opération de restitution de la composante continue. En effet, en cas de diffusion par satellite, on peut compter au moins trois clamps successifs dans la chaine de transmission, intervenant respectivement au moment de la modulation du faisceau hertzien d'émission, puis au moment de l'opération de démodulations-remodulations H.F. vers le satellite-relais, et enfin lors de la réception par l'utilisateur. En cas de distribution du signal reçu sur un réseau, un quatrième clamp est à prévoir. Or, du fait de l'addition quadratique des défauts, cette cascade de plusieurs clamps nécessite des précautions particulières afin d'éviter que le bruit de clamp ne soit visible à la réception.

En fait, le problème intrinsèque du clamp est le sous-échantillonnage ; la solution la plus simple serait d'augmenter la durée de la période de clamp. Toutefois, dans le cas d'un signal D2MAC/paquet, ceci imposerait de modifier la norme. Une autre solution consiste à effectuer un filtrage de correction sur plusieurs lignes, pour limiter le bruit d'estimation. Mais, dans ce cas, on corrige mal les défauts basse fréquence du type de ceux induits par le traitement en dispersion d'énergie.

Cette constatation illustre la contrainte du compromis nécessaire, déjà mentionnée, pour la correction bruit de clamp/bruit BF.

L'objectif de l'invention est de fournir un procédé de restitution de la composante continue permettant de résoudre les différentes limitations des systèmes existants, particulièrement dans le cas d'un signal source du type de la famille MAC/Paquet.

Plus précisément, un premier objectif de l'invention est de réaliser un procédé de restitution de la composante continue assurant une augmentation apparente et effective de la durée de la période d'alignement, dans un signal de la famille MAC/paquet. Il s'agit donc, sans modifier la norme, ni la structure des signaux transmis, de pallier le problème du sous échantillonnage de l'estimation de la composante continue, par l'opération de clamp, en allongeant l'étape d'estimation et en multipliant le nombre de valeurs d'estimation de la composante continue.

Un autre objectif de l'invention est de fournir un tel procédé qui utilise la spécificité de la structure des signaux MAC/paquet pour réaliser cette augmentation artificielle de la durée de la période d'alignement.

Un objectif complémentaire de l'invention est de fournir un tel procédé qui fonctionne aussi bien à partir d'une version analogique du signal MAC, qu'à partir d'une version numérique.

L'invention a également pour objectif de fournir un tel procédé dont la mise en oeuvre soit compatible avec une chaine de transmission du signal comportant une cascade de clamps. Le procédé doit en effet pouvoir trouver place en différents points de la chaîne de transmission.

Ces objectifs, ainsi que d'autres qui apparaitront par la suite, sont atteints à l'aide d'un procédé de restitution de la composante continue d'un signal source de télévision, du type de la famille MAC/Paquets, chaque ligne étant notamment constituée d'un multiplex temporel, d'une salve de données en codage numérique duobinaire, d'une partie image, et d'une période d'alignement,

caractérisé en ce que la composante continue, pour chaque ligne, est restituée au moyen d'une estimation de la valeur de ladite composante réalisée à partir d'une opération de détection du niveau du signal de données duobinaire lors des passages à zéro dudit signal duobinaire.

De façon préférentielle, ladite estimation est réalisée en prenant en compte à la fois la détection du niveau des passages à zéro dudit signal duobinaire, et le niveau du signal dans ladite période d'alignement.

Ce procédé permet ainsi de bénéficier du fait que le niveau du zéro du signal duobinaire est identique au niveau de la période d'alignement.

En conséquence, la prise en compte du passage à zéro du signal, à la fois pendant la durée des données duobinaires, et pendant la période d'alignement, permet de prolonger artificiellement la durée de la période d'alignement.

De façon avantageuse, ladite détection du niveau des passages à zéro dudit signal duobinaire, est réalisée par détection et comptage du nombre desdits passages à zéro, par accumulation des niveaux continus aux instants desdits zéros, et par division dudit cumul par le nombre de zéros, afin d'obtenir un niveau moyen estimé de la composante continue.

Dans des modes de réalisation préférentiels de l'invention, la composante continue estimée subit un filtrage effectué sur au moins deux lignes consécutives du signal source, par exemple sur six lignes. Le procédé inclut également avantageusement une étape de prédiction de la correction d'une modulation avec dispersion d'énergie du signal source.

Les objectifs de l'invention sont également atteints à l'aide d'un dispositif de mise en oeuvre du procédé ci-dessus, caractérisé en ce qu'il comprend:

- des moyens de comptage du nombre de passages à zéro de chacune desdites salves de données duobinaires,
- des moyens d'accumulation des niveaux dudit signal duobinaire décodé aux instants desdits passages à zéro,
- des moyens de commande de l'activation desdits moyens d'accumulation,
- des moyens de division du contenu desdits moyens d'accumulation, par le contenu desdits moyens de comptage.

La salve de données duobinaire décodée étant un signal analogique, ce dernier peut être soit converti en format numérique pour l'opération de restitution de la composante continue de façon numérique (par exemple avec un circuit additionneur monté en accumulateur), soit directement utilisé dans un circuit analogique à capacité rechargeable.

D'autres caractéristiques et avantages de l'invention apparaîtront à la lecture suivante de la description d'un mode de réalisation préférentiel de l'invention, donné à titre illustratif, et des dessins annexés dans lesquels :

- la figure 1 représente le schéma classique d'un circuit analogique de clamp ;
- la figure 2 schématise la structure du signal D2MAC/Paquet en bande de base ;

- la figure 3 est un schéma descriptif des différents circuits et modules d'un mode de réalisation préférentiel du dispositif selon l'invention fonctionnant en mode numérique ;
- la figure 4 est la représentation, sous forme de diagramme de l'oeil, de la forme du signal D2MAC dans la salve de données.

Comme représenté en figure 2, le signal D2MAC, en bande de base est constitué, pour chaque ligne, successivement d'une salve de données 21, d'une période d'alignement 22, d'un signal de chrominance 23 et d'un signal de luminance 24.

La durée de ces différents signaux, ainsi que des périodes de transition, est la suivante :

a =     208 périodes pour 105 bits de données et de synchro

b =     4 périodes d'horloge pour la transition à la fin des données

c =     15 périodes d'horloge - période d'alignement (0,5 V)

d =     11 périodes d'horloge pour la transition pondérée vers le signal de différence de couleur

e =     348 périodes d'horloge (349 échantillons) pour la composante de différence de couleur

g =     6 périodes d'horloge pour la transition pondérée du signal de différence de couleur à celui de luminance

h =     696 périodes d'horloge (697 échantillons) pour la composante de luminance

j =     8 périodes d'horloge pour la transition pondérée à la fin du signal de luminance.

Pour une fréquence d'horloge à 20,25 MHz, la valeur de la demi-période symbole T est de 49,4 ns, ce qui donne une période symbole de 98,8 ns.

Selon l'invention, on exploite la salve de données 21 pour augmenter artificiellement la durée de la période d'alignement.

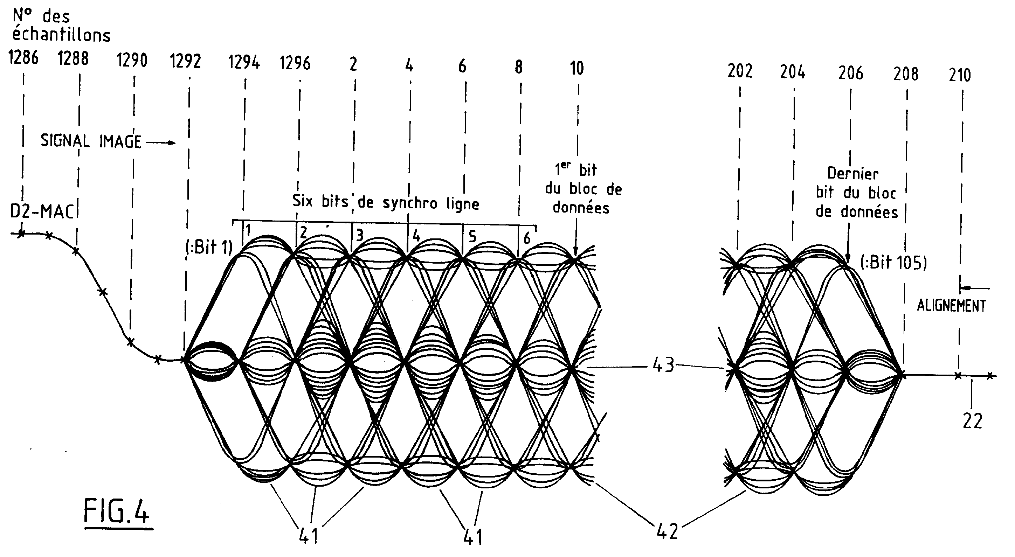

Dans le signal D2MAC, chaque salve de données comporte un total de 105 bits. 6 bits 41 constituent le mot de synchronisation de ligne, et les 99 bits restants 42 sont utilisés pour la transmission des sons et des données organisés en paquet de 751 bits (Figure 4).

Dans le standard à 625 lignes, une période d'alignement 22 de 15 échantillons suit la salve numérique de toutes les lignes de 1 à 624. La fin de la salve 624 contient un mot de marquage de la position de la période d'alignement.

Le principe du codage duobinaire, retenu pour la salve de données, consiste à utiliser un code à trois niveaux obtenu par addition arithmétique du signal binaire (0,1) à coder, avec lui-même, retardé d'un cycle d'horloge, selon la formule.

$$c_k = b_k + b_{k-1},$$

avec

ck : valeur de codage duobinaire ;

bk : valeur du signal binaire ;

+ : addition arithmétique.

Le codage duobinaire présente l'avantage de compacter le contenu spectral du signal. L'opération de codage duobinaire est précédée d'une opération de précodage, permettant d'éviter les propagations d'erreurs, et de simplifier le décodage.

Comme représenté en figure 4, le diagramme de l'oeil de la salve de données duobinaire permet de mettre en évidence les passages à zéro 43 du signal. Du fait du principe du signal duobinaire (1,0,-1), le signal prend la valeur zéro sur au moins la moitié des symboles duobinaires 42. C'est chacun de ces passages à zéro 43 que le procédé de restitution de la composante continue suivant l'invention exploite dans le but d'augmenter artificiellement la période d'alignement.

Cette augmentation de la période d'alignement est particulièrement utile pour diminuer fortement les effets des bruits de clamp. A titre d'exemple de la sensibilité de l'oeil du spectateur de télévision aux défauts du type des bruits de clamp, on notera que les seuils de perception des défauts, ont été déterminés comme suit :

| TYPE DE DEFAUT | SEUIL DE PERCEPTION | REJECTION NECESSAIRE |
|---|---|---|
| Résidu maximum crête à crête de dispersion d'énergie à fréquence image | 10 mV | 40 dBV |
| Résidu maximum crête à crête de cassures aux basses fréquences | 30 mV | 30 dBV |
| Résidu maximum en quasi crête à crête du signal BF non corrélé | 3 mV | 50 dBV |
| Résidu maximum en valeur efficace de bruit de clamp | 1 mV | 60 dBV |

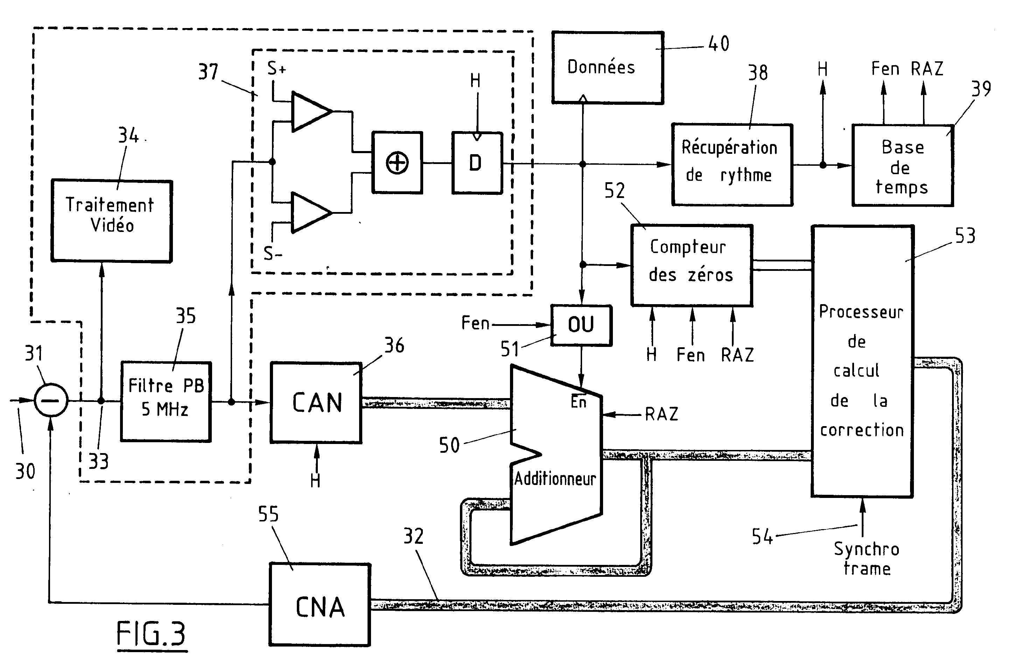

La figure 3 schématise un mode de réalisation en mode numérique d'un dispositif de restitution de la composante continue suivant l'invention.

Sur cette figure 3, le signal en bande de base décodé 30 est introduit dans le circuit de l'invention selon une amplitude 1 V crête-crête.

Après passage dans un circuit soustracteur 31 dont la seconde entrée reçoit la boucle de rétroaction 32 du circuit de restitution de la composante continue, une portion du signal est prélevée en 33 pour l'acheminement vers les circuits de traitement de vidéo 34.

Un filtre passe-bas 35 à 5 MHz assure l'élimination du bruit du signal, avant la conversion dans le convertisseur analogique-numérique 36.

Le signal filtré par le filtre passe-bas 35 est également acheminé vers un circuit convertisseur duobinaire/binaire 37, qui alimente notamment un module de récupération de rythme 38 fournissant le signal d'horloge H, et un module de base de temps 39.

Le signal converti en binaire est également envoyé vers un module de traitement de données 40.

L'ensemble des circuits 34, 35, 37, 38, 39, 40, appartiennent à la chaine classique de traitement du signal DMAC à la réception.

Le fonctionnement du circuit additionneur est commandé par le circuit OU 51, qui est sous contrôle du signal Fen issu du circuit de base de temps 39. Ce signal Fen est une fenêtre encadrant la partie duobinaire du signal, et la période d'alignement. Il est actif à l'état bas.

Parallèlement au circuit additionneur 50, le circuit 52 de comptage des zéros est également placé, lui aussi, sous contrôle du signal Fen, ainsi que d'un signal supplémentaire RAZ de remise à zéro. Le signal RAZ est également issu du module de base de temps 39.

On notera que le signal d'horloge H récupéré en sortie du module 38 commande également le circuit de comptage de zéro 52, ainsi que le convertisseur analogique numérique 36.

L'additionneur 50 et le compteur de zéro 52 alimentent enfin un processeur 53 de calcul de la correction de la composante continue. Le processeur 53 joue le rôle de moyenneur, en divisant la valeur cumulée obtenue dans l'additionneur 50, par le nombre de zéro comptés dans le circuit 52.

Un signal de synchronisation de trame 54, alimentant le processeur 53, permet de tenir compte d'une information de prédiction de la dispersion d'énergie des signaux transmis en radiodiffusion par satellite. Cette prédiction est obtenue aisément du fait que la composante BF de dispersion d'énergie est synchrone de la trame.

Le signal de correction calculé par le processeur 53 est réacheminée par la boucle de rétroaction 32 vers l'entrée du dispositif. Ce signal est converti en mode analogique dans le convertisseur numérique analogique 55, avant d'arriver en entrée du circuit soustracteur 31.

Le fonctionnement de ce dispositif est le suivant.

Le compteur 52 est incrémenté à chaque fois qu'un zéro est présent dans le signal duobinaire 30. De son côté, la logique de commande constituée par le circuit OU 51 permet de n'activer la fonction d'addition de l'additionneur 50 que pendant la période d'émission d'une salve de données duobinaire, et uniquement lorsque le symbole émis est un zéro.

L'additionneur 50, monté en accumulateur, totalise le cumul des niveaux continus aux instants des zéros du signal de données.

De façon avantageuse, la période d'alignement (intervalle de clamp), ainsi que la transition entre la salve de données et la période d'alignement, sont inclus dans le processus.

Le compteur 52 calcule le nombre de zéros contenus dans la partie duobinaire du signal entre deux remises à zéro RAZ.

A partir de ces informations, le processeur 53 effectue les opérations suivantes :
- une opération de division du total cumulé fourni par l'additionneur 50, par le nombre de zéro fourni par le compteur 52. Cette opération permet d'obtenir le niveau moyen de l'estimation de la composante continue ;
- une opération de filtrage de l'estimation sur plusieurs lignes. De façon avantageuse, ce filtrage peut être effectué sur au moins deux lignes, et par exemple sur six lignes consécutives. Ceci permet de limiter le bruit d'estimation ;
- une opération optionnelle de prédiction de la correction du signal de dispersion d'énergie, dans le cas d'une transmission du signal par satellite.

Ce dispositif permet très efficacement de prolonger artificiellement la durée de la période d'alignement. En effet, du fait qu'une salve de données duobinaire comprend environ une centaine de symboles duobinaires, on peut donc y compter environ une cinquantaine de passages à zéro. En additionnant le nombre de bits de la période d'alignement, qui est de 15 dans le cas d'un signal D2MAC, on obtient ainsi 65 passages à zéro environ, ce qui correspond à plus qu'un quadruplement du nombre d'échantillons prélevés.

D'autre part, on constate également que la durée d'observation pendant laquelle sont prélevés les échantillons de passage à zéro est d'environ 5750 ns (15x49,4ns + 50x98,8ns), soit plus de sept fois la durée de la période d'alignement.

On constate d'ailleurs qu'il serait envisageable de se passer, le cas échéant, des quinze échantillons de la période d'alignement.

De façon alternative au dispositif de la figure 3, un autre mode de réalisation de l'invention consisterait à remplacer les moyens de comptage des passages à zéro et d'accumulation des niveaux du signal, par une capacité sélectivement rechargée lors desdits instants de passages à zéro du signal duobinaire. Bien que moins performante que la version numérique, cette version analogique est tout à fait opérationnelle.

Dans une application avantageuse de l'invention, ce dispositif de restitution de la composante continue peut être placé dans un régénérateur de signal, de la chaine de transmission du signal DMAC.

Le dispositif de l'invention trouve place également aussi bien dans les stations d'émission vers des satellites-relais de diffusion, que dans des têtes de réseaux de réception, et dans les récepteurs terminaux de la chaine de transmission.

## Revendications

1. Procédé de restitution de la composante continue de référence d'un signal source de télévision, du type de la famille MAC/Paquets, chaque ligne étant notamment constituée d'un multiplex temporel d'une salve de données (21) en codage numérique duobinaire, d'une partie image (23, 24), et d'une période d'alignement (22),

   caractérisé en ce que la composante continue, pour chaque ligne, est restituée au moyen d'une estimation de la valeur de ladite composante réalisée à partir d'une opération de détection du niveau du signal de données duobinaire lors des passages à zéro (43) dudit signal duobinaire.

2. Procédé suivant la revendication 1, caractérisé en ce que ladite estimation est réalisée en prenant en compte à la fois la détection du niveau des passages à zéro dudit signal duobinaire (21), et le niveau du signal dans ladite période d'alignement (22).

3. Procédé suivant l'une quelconque des revendications 1 et 2, caractérisé à ce que ladite détection du niveau des passages à zéro dudit signal duobinaire, est réalisée par détection et comptage du nombre desdits passages à zéro (43), par accumulation des niveaux continus aux instants desdits zéros, et par division dudit cumul par le nombre de zéros, afin d'obtenir un niveau moyen estimé de la composante continue.

4. Procédé suivant l'une quelconque des revendications 1 à 3, caractérisé en ce que ladite composante continue estimée subit un filtrage effectué sur au moins deux lignes consécutives du signal source.

5. Procédé suivant l'une quelconque des revendications 1 à 3, caractérisé en ce qu'il inclut une étape de prédiction de la correction d'une modulation avec dispersion d'énergie du signal source.

6. Dispositif de mise en oeuvre du procédé de restitution de la composante continue d'un signal source du type de la famille MAC Paquets, selon l'une quelconque des revendications 2 à 5, caractérisé en ce qu'il comprend :
   - des moyens de comptage (52) du nombre de passages à zéro (43) de chacune desdites salves de données duobinaires (22),
   - des moyens (50) d'accumulation des niveaux dudit signal duobinaire décodé aux instants desdits passages à zéro (43),
   - des moyens (51) de commande de l'activation desdits moyens d'accumulation (50),
   - des moyens (53) de division du contenu desdits moyens d'accumulation (50), par le contenu desdits moyens de comptage (52).

7. Dispositif suivant la revendication 6, caractérisé en ce que ladite salve de données duobinaire (22) décodée est un signal analogique, et en ce que lesdits moyens d'accumulation comprennent un convertisseur analogique-numérique (36), et un circuit additionneur (50), monté en accumulateur.

8. Dispositif suivant la revendication 6 caractérisé en ce que ladite salve de données duobinaire (22) est un signal analogique, et en ce que lesdits moyens d'accumulation et de division sont remplacés par une capacité sélectivement rechargée lors desdits instants de passages à zéro (43) dudit signal duobinaire (22).

9. Dispositif suivant la revendication 6 caractérisé en ce qu'il comprend des moyens (53, 54) de prédiction de la correction d'une modulation avec dispersion d'énergie du signal source.

10. Régénérateur de signal caractérisé en ce qu'il comprend un dispositif selon l'une quelconque des revendications 6 à 9.

11. Utilisation d'un dispositif selon l'une quelconque des revendications 6 à 9, dans une station d'émission en ligne montante vers un satellite et/ou dans une tête de réseau de réception en ligne descendante d'un signal provenant d'un satellite.

**Patentansprüche**

1. Verfahren zur Wiederherstellung der kontinuierlichen Referenz-Signal-Komponente eines Fernseh-Quellsignals , vom Typ der MAC/Paquets-Familie, wobei jede Zeile insbesondere enthält ein zeitliches Multiplexsignal aus einem duobinär numerisch kodierten Datenbündel (21), ein Teilbild (23, 24) und ein Rücksetzintervall (22),
dadurch gekennzeichnet, daß die kontinuierliche Signalkomponente für jede Zeile mittels einer Wertabschätzung dieser Signalkomponente wieder hergestellt wird, welche bei einer Operation zur Erkennung des Pegels des duobinären Datensignals während der Nulldurchgänge (43) des duobinären Signals verwirklicht wird.

2. Verfahren nach Anspruch 1,
dadurch gekennzeichnet, daß die Abschätzung dadurch verwirklicht wird, daß gleichzeitig der Pegel der Nulldurchgänge des duobinären Signals (21) und der Pegel des Signals des Rücksetzintervalls (22) betrachtet wird.

3. Verfahren nach einem der Ansprüche 1 und 2,

dadurch gekennzeichnet, daß die Betrachtung des Pegels der Nulldurchgänge des duobinären Signals dadurch verwirklicht wird, daß die Nulldurchgänge (43) detektiert und gezählt werden, daß die aufeinanderfolgenden Pegel zum Zeitpunkt der Nulldurchgänge akkumuliert werden und daß die Summe durch die Anzahl der Nulldurchgänge geteilt wird, um den mittleren abgeschätzten Pegel der kontinuierlichen Sigalkomponente zu erhalten.

4. Verfahren nach einem der Ansprüche 1 bis 3, dadurch gekennzeichnet, daß der Schätzwert der kontinuierlichen Signalkomponente einer Filterung unterzogen wird, die auf mindestens zwei aufeinanderfolgenden Zeilen des Quellsignals durchgeführt wird.

5. Verfahren nach einem der Ansprüche 1 bis 3, gekennzeichnet durch eine Vorhersage der Korrektur einer Modulation mittels der Dispersion der Energie des Quellsignals.

6. Vorrichtung zur Durchführung eines Verfahrens zur Wiederherstellung der kontinuierlichen Signal-Komponente des Quellsignals vom Typ der Familie MAC/Paquets, nach einem der Ansprüche 2 bis 5, gekennzeichnet durch
Mittel zum Zählen (52) der Zahl der Nulldurchgänge (43) jedes der duobinären Datenbündel (21),
Mittel (50) zur Akkumulation des Pegels des duobinären Signals, welches zum Zeitpunkt der Nulldurchgänge (43) dekodiert wird,
Mittel (51) zur Steuerung der Aktivierung der Akkumulationsmittel (50),
Mittel (53) zum Dividieren des Inhalts der Akkumulationsmittel (50) durch den Inhalt der Mittel (52) zum Zählen.

7. Vorrichtung nach Anspruch 6, dadurch gekennzeichnet, daß das dekodierte duobinäre Datenbündel (21) ein Analogsignal ist, und daß die Akkumulierungsmittel eine analog-numerischen Wandler (36) und einen als Akkumulator dienenden Addierkreis (50) enthält.

8. Vorrichtung nach Anspruch 6, dadurch gekennzeichnet, daß das duobinäre Datenbündel (21) ein Analogsignal ist, und daß die Akkumulierungsmittel und die Mittel zum Dividieren durch einen Kondensator ersetzt sind, der während der Nulldurchgänge (43) des duobinären Signals (22) selektiv wieder geladen wird.

9. Vorrichtung nach Anspruch 6, gekennzeichnet durch Mittel (53, 54) zur Vorhersage der Korrektur einer Modulation mittels Dispersion der Energie des Quellsignals.

10. Regenerationsschaltung, dadurch gekennzeichnet, daß sie eine Vorrichtung gemäß einem der Ansprüche 6 bis 9 enthält.

11. Verwendung der Vorrichtung nach einem der Ansprüche 6 bis 9 in einer Sendestation, die an einen Satelliten sendet, und/oder im Kopf einer Empfangsstation, die von einem Satelliten das Signal empfängt.

**Claims**

1. Method of restoring the reference DC component of a television source signal, of the type of the MAC/Packets family, each line being especially constituted by a time multiplex of a burst of data (21) in duobinary digital coding, of an image part (23, 24), and of an alignment period (22), characterised in that the DC component, for each line, is restored by means of an estimate of the value of the said component produced from an operation for detection of the level of the duobinary data signal during zero crossings (43) of the said duobinary signal.

2. Method according to Claim 1, characterised in that the said estimate is produced by taking into account both the detection of the level of the zero crossings of the said duobinary signal (21), and the level of the signal in the said alignment period (22).

3. Method according to any one of Claims 1 or 2, characterised in that the said detection of the level of the zero crossings of the said duobinary signal, is produced by detection and counting of the number of the said zero crossings (43), by accumulation of the DC levels at the instants of the said zeros, and by division of the said total by the number of zeros, so as to obtain a mean estimated level of the DC component.

4. Method according to either of Claims 1 to 3, characterised in that the said estimated DC component undergoes filtering carried out over at least two consecutive lines of the source signal.

5. Method according to any one of Claims 1 to 3, characterised in that it includes a step or prediction of the correction of a modulation with dispersion of energy from the source signal.

6. Device for implementing the method of restoring the DC component of a source signal of the type of the MAC Packets family, according to any one of Claim 2 to 5, characterised in that it comprises:
   - means of counting (52) the number of zero crossings (43) of each of the said bursts of duobinary data (21),
   - means (50) for the accumulation of the levels of the said decoded duobinary signal at the instants of the said zero crossings (43),
   - means (51) for control of the activation of the said accumulation means (50),
   - means (53) for division of the contents of the said accumulation means (50), by the contents of the said counting means (52).

7. Device according to Claim 6, characterised in that the said burst of decoded duobinary data (21) is an analog signal, and in that the said accumulation means comprise an analog digital converter (36), and an adder circuit (50), mounted as an accumulator.

8. Device according to Claim 6, characterised in that the said burst of duobinary data (21) is an analog signal, and in that the said accumulation and division means are replaced by a capacitor which is selectively recharged during the said instants of zero crossings (43) by the said duobinary signal.

9. Device according to Claim 6, characterised in that it comprises means (53, 54) for prediction of the correction of a modulation with dispersion of energy of the source signal.

10. Signal regenerator, characterised in that it comprises a device according to any one of Claims 6 to 9.

11. Use of a device according to any one of Claims 6 to 9, in an uplink transmission station for a satellite and/or in a downlink receiver network head for a signal originating from a satellite.

EP 0 348 322 B1

## FIG.1

$$e(t) \quad r \quad C \quad I \quad R \quad s(t)$$

## FIG.2

Signal de différence de couleur

Signal de luminance

N° des échantillons

FIG.3

Nº des
échantillons

1286  1288  1290  1292  1294  1296  2  4  6  8  10  202  204  206  208  210

SIGNAL IMAGE →

D2-MAC

Six bits de synchro ligne

1ᵉʳ bit
du bloc de
données

Dernier
bit du bloc
de données

(:Bit 1)

1  2  3  4  5  6

(:Bit 105)

ALIGNEMENT

43

42

41  41

22

FIG.4

EP 0 348 322 B1